# EUROPÄISCHE PATENTSCHRIFT

(11) **EP 3 962 803 B1**
(45) Veröffentlichungstag und Bekanntmachung des Hinweises auf die Patenterteilung: **02.07.2025**
(21) Anmeldenummer: 20724056.5
(22) Anmeldetag: 04.05.2020
(51) Int. Cl.: B62K 15/00, B62K 21/24

(54) **VORBAU FÜR EIN FAHRRAD**
STEM FOR A BICYCLE
AVANT-CORPS POUR BICYCLETTE

(30) Priorität: 03.05.2019 DE 102019111562
(43) Veröffentlichungstag der Anmeldung: 09.03.2022
(73) Patentinhaber: Klieber, Jochen, 83342 Tacherting (DE)
(72) Erfinder: Klieber, Jochen, 83342 Tacherting (DE)
(74) Vertreter: WBH Wachenhausen Patentanwälte PartG mbB
(86) Internationale Anmeldenummer: PCT/EP2020/062253
(87) Internationale Veröffentlichungsnummer: WO 2020/225181

(56) Entgegenhaltungen:
- CN-A- 103 569 287
- CN-A- 104 229 045
- CN-U- 202 541 746
- GB-A- 2 475 286
- TW-U- M 309 544

## Beschreibung

### Technisches Gebiet

Die Erfindung betrifft einen Vorbau für ein Fahrrad sowie ein Fahrrad mit einem solchen Vorbau.

### Stand der Technik

Im Stand der Technik ist ein Vorbau für ein Fahrrad bekannt, der ein Verdrehen des Fahrradlenkers in Bezug auf eine Fahrradgabel ermöglicht. Das Dokument CN202541746U offenbart zum Beispiel einen Vorbau für ein Fahrrad, mit einem Lenkerkopplungsabschnitt und einem beabstandet zu diesem vorgesehenen Gabelschaftkopplungsabschnitt, wobei der Gabelschaftkopplungsabschnitt einen Gabelschaftstützabschnitt und eine in dem Gabelschaftstützabschnitt drehbar aufgenommene Gabelschafthalterung aufweist, wobei der Vorbau ferner einen Sperrmechanismus zum Sperren einer Drehbewegbarkeit der Gabelschafthalterung in zumindest einer Drehrichtung aufweist, wobei der Sperrmechanismus dazu eingerichtet ist, die Drehbewegbarkeit der Gabelschafthalterung durch eine kraftschlüssige Klemmung mit einem in axialer Richtung innerhalb des Gabelschaftstützabschnitts befindlichen Halterabschnitt der Gabelschafthalterung zu Sperren.

### Darstellung der Erfindung

Die Erfindung betrifft in einem Aspekt einen verbesserten Vorbau, der ein Verdrehen eines Fahrradlenkers relativ zu einer Fahrradgabel ermöglicht und dabei eine besonders geringe Bauhöhe bei verbesserter Sicherheit für den Nutzer aufweist.

Bei dem Vorbau kann es sich um einen umdrehbaren Vorbau handeln, sodass der Vorbau für zwei unterschiedlich hohe Lenkerpositionen verwendet werden kann. Der Vorbau kann einen Vorbauwinkel aufweisen. Ferner kann der Vorbau auch ein Nullgrad-Vorbau sein.

Der Vorbau kann einen Lenkerkopplungsabschnitt und einen beabstandet zu diesem vorgesehenen Gabelschaftkopplungsabschnitt aufweisen. Der Lenkerkopplungsabschnitt ist zur Aufnahme eines Lenkerschafts ausgebildet. Der Lenkerkopplungsabschnitt kann einen rohrschellenartigen Aufbau aufweisen, um einen Lenkerschaft aufzunehmen und diesen festzuklemmen. Der Gabelschaftkopplungsabschnitt ist zum Aufnehmen eines Gabelschafts eingerichtet.

Der Gabelschaftkopplungsabschnitt weist einen Gabelschaftstützabschnitt und eine in dem Gabelschaftstützabschnitt drehbar aufgenommene Gabelschafthalterung auf. Die Gabelschafthalterung ist demnach so in dem Gabelschaftstützabschnitt aufgenommen, dass diese in diesem verdreht beziehungsweise relativ zu diesem verschwenkt werden kann. Die Gabelschafthalterung ist dazu eingerichtet, einen Abschnitt des Gabelschafts einer Fahrradgabel aufzunehmen. Beispielsweise kann der Gabelschaft durch Klemmen in der Gabelschafthalterung befestigt werden. Insbesondere kann die Gabelschafthalterung fest auf dem Gabelschaft befestigbar sein. Bei an einem Gabelschaft befestigter Gabelhalterung kann demnach der Gabelschaftstützabschnitt und damit ein an dem Vorbau befestigter Lenker um den Gabelschaft geschwenkt werden.

Der Vorbau weist ferner einen Sperrmechanismus zum Sperren einer Drehbewegbarkeit der Gabelschafthalterung in zumindest einer Drehrichtung auf. Der Sperrmechanismus kann dazu eingerichtet sein, die Drehbewegbarkeit der Gabelschafthalterung durch formschlüssigen Eingriff mit einem in axialer Richtung innerhalb des Gabelschaftstützabschnitts befindlichen Halterabschnitt der Gabelschafthalterung zu sperren. Der Sperrmechanismus eignet sich dazu, die Gabelschafthalterung und einen an der Gabelschafthalterung befestigten Gabelschaft zumindest in einer Gebrauchsstellung zu arretieren. Die Gebrauchsstellung ist dabei eine Stellung, bei welcher sich der Lenker quer zur Erstreckungsrichtung eines in der Fahrradgabel aufgenommenen Vorderrads erstreckt. In der Gebrauchsstellung befindet sich der Vorbau zudem in einem Zustand, in welchem zusätzlich eine Festklemmung der Gabelhalterung in dem Gabelschaftstützabschnitt erfolgen kann, um eine besonders feste und spielfreie, drehfeste Kopplung zwischen Lenker und Gabel zu erhalten. Der Sperrmechanismus kann demnach als eine Art Vorjustierung zum zuverlässigen Herbeiführen und Beibehalten der Gebrauchstellung in Vorbereitung auf ein finales Festpannen zum Festklemmen des Gabelschafts verwendet werden. Gleichzeitig wirkt der Sperrmechanismus als zusätzliches Sicherungsmittel zum Verhindern eines unbeabsichtigten Verdrehens des Lenkers relativ zu der Fahrradgabel im Falle eines Versagens bzw. unbeabsichtigten Aufhebens der Klemmverbindung zwischen Gabelhalterung und Gabelschaftstützabschnitt.

Bei dem beschriebenen Vorbau kann somit die Drehbewegbarkeit der Gabelschafthalterung durch einen Eingriff mit einem im Gabelschaftstützabschnitt befindlichen Element erfolgen. Ein Eingriff erfolgt somit im Inneren des Gabelschaftstützabschnitts. Auf diese Weise ist ein Vorbau mit einem integrierten Schwenkmechanismus und einem integrierten Sperrmechanismus geschaffen.

Gemäß einer bevorzugten Ausführungsform ist der Sperrmechanismus im Wesentlichen vollständig innerhalb des Gabelschaftstützabschnitts vorgesehen. Unter im Wesentlich vollständig innerhalb des Gabelschaftstützabschnitts vorgesehen kann im Kontext der vorliegenden Erfindung ein derartiges Vorsehen verstanden werden, bei dem beinahe alle wesentlichen Komponenten, insbesondere die Komponenten, welche den formschlüssigen Eingriff bewirken, vollständig innerhalb des Gabelschaftstützabschnitts vorgesehen sind, und lediglich beispielsweise eine Betätigungskomponente oder ein Betätigungsabschnitt des Sperrmechanismus aus dem Gabelschaftstützabschnitt herausragen kann.

Gemäß einer bevorzugten Ausführungsform kann der Sperrmechanismus ein Rastelement aufweisen. Das Rastelement kann ein plattenartiges Element sein. Das Rastelement kann aus Metall hergestellt sein. Das Rastelement kann zur Erzeugung des formschlüssigen Eingriffs vorgesehen sein. Dazu kann das Rastelement zwischen einer Sperrposition und einer Freigabeposition beweglich angeordnet sein. In der Sperrposition wird eine Drehung der Gabelschafthalterung relativ zu dem Gabelschaftstützabschnitt gesperrt. In der Freigabestellung wird eine Drehung beziehungsweise ein Verschwenken der Gabelschafthalterung relativ zu dem Gabelschaftstützabschnitt gestattet. Das Rastelement kann einen Kontaktabschnitt aufweisen, der in der Sperrposition in Kontakt mit einem Sperrabschnitt der Gabelschafthalterung gelangen kann. Der Sperrabschnitt kann an dem Halterabschnitt vorgesehen sein. Der Kontaktabschnitt kann an dem Rastelement als eine Kontaktfläche ausgebildet sein. Die Kontaktfläche kann dabei insbesondere eine die Längserstreckung des Rastelements begrenzende Längsendfläche, beispielsweise eine Stirnfläche, des Rastelements sein.

Gemäß einer Ausführungsform kann der Kontaktabschnitt des Rastelements in Richtung einer Gabelschafthalterungsdrehachse der Gabelhalterung hin- und herbewegbar angeordnet sein. Beispielsweise kann der Kontaktabschnitt in radialer Richtung auf die Gabelschafthalterungsdrehachse zu und von dieser weg bewegbar sein. Zusätzlich kann der Kontaktabschnitt jedoch entlang einer Bahn bewegbar sein, die so verläuft, dass bei einer Bewegung des Kontaktabschnitts entlang der Bahn der Abstand zu der Gabelschafthalterungsdrehachse verringert oder vergrößert wird.

Gemäß einer weiteren Ausführungsform kann das Rastelement schwenkbar an einem Stützabschnitt des Gabelschaftstützabschnitts abgestützt sein. Das Rastelement kann dazu ein abgerundetes Ende aufweisen, welches in einer abgerundeten Vertiefung abgestützt ist. Ist das Rastelement plattenartig ausgebildet, so kann ein Ende des plattenartigen Rastelements in Form eines Halbzylinders ausgebildet sein. Eine Mittelachse des Halbzylinders kann dann eine Schwenkachse des Rastelements um den Stützabschnitt definieren. Das Rastelement kann somit gemeinsam mit dem Stützabschnitt ein scharnierartiges Gelenk bilden. Der vorstehend beschriebene Kontaktabschnitt kann an einem Ende des Rastelements ausgebildet sein, welches zu dem Ende des Rastelements entgegengesetzt ist, an welchem das Rastelement an dem Stützabschnitt abgestützt ist. Das Rastelement kann schwenkbar um eine zu der Gabelschafthalterungsdrehachse parallele Schwenkachse sein. Die Schwenkachse des Rastelements kann demnach parallel zu der Gabelschafthalterungsdrehachse verlaufen.

Gemäß einer bevorzugten Ausführungsform kann der Sperrmechanismus ein Drängbauteil aufweisen, welches das Rastelement in Richtung Sperrposition vorspannt. Auf diese Weise kann der Sperrmechanismus selbsttätig ausgebildet sein, sodass der formschlüssige Eingriff bei entsprechender Ausrichtung der beteiligten Komponenten automatisch herbeigeführt wird.

Gemäß einer bevorzugten Ausführungsform kann das Drängbauteil eine Blattfeder aufweisen. Die Blattfeder kann einseitig an dem Gabelschaftstützabschnitt befestigt sein. Vorzugsweise kann die Blattfeder zumindest abschnittsweise um die Gabelschafthalterungsdrehachse herum gekrümmt ausgebildet sein.

Gemäß einer bevorzugten Ausführungsform kann das Drängbauteil mittels eines Fixierabschnitts einseitig an dem Gabelschaftstützabschnitt fixiert sein und neben dem Fixierabschnitt einen durch einen Nutzer handhabbaren Betätigungsabschnitt zum Verstellen des Drängbauteils in Richtung Freigabeposition sowie einen vorzugsweise in Erstreckungsrichtung des Drängbauteils zwischen dem Fixierabschnitt und dem Betätigungsabschnitt vorgesehenen Befestigungsabschnitt aufweisen, an welchem das Rastelement montiert ist.

Gemäß einer Ausführungsform kann der Betätigungsabschnitt seitlich aus dem Gabelschaftstützabschnitt, insbesondere aus einem ein Gehäuse bildenden Abschnitt des Gabelschaftstützabschnitts, herausragen. Auf diese Weise kann ein Nutzer den Betätigungsabschnitt ergreifen und den Sperrmechanismus auf einfache Weise in Richtung Freigabeposition betätigen.

Gemäß einer weiteren Ausführungsform kann die Gabelschafthalterung einen asymmetrisch geformten, rohrschellenartigen Klemmkörper aufweisen. Der Klemmkörper bildet vorzugsweise den Halterabschnitt der Gabelschafthalterung. In dem Klemmkörper kann eine Hülse vorgesehen sein, die zur Aufnahme des Gabelschafts ausgebildet ist und die zum finalen, verdrehfesten Festklemmen des Gabelhalters im Gabelschaftstützabschnitt festgeklemmt werden kann.

Der Klemmkörper kann zwei Schenkelabschnitte aufweisen, die zwischen sich einen Aufnahmebereich zum Aufnehmen der Hülse und/oder eines Gabelschaftabschnitts der Fahrradgabel aufweisen. Zur Erzeugung einer Klemmkraft kann ein Abstand zwischen freien Enden der Schenkelabschnitte verringert werden, um eine Abmessung des Aufnahmebereichs zu reduzieren. An einem freien Ende der beiden freien Enden der Schenkelabschnitte kann eine Sperrfläche als mit dem Rastelement kooperierender Teil des formschlüssigen Eingriffs ausgebildet sein. Die Sperrfläche kann sich im Wesentlichen in radialer Richtung zu der Gabelschafthalterungsdrehachse erstrecken. Im Kontext der vorliegenden Erfindung bedeutet im Wesentlichen in radialer Richtung zu der Gabelschafthalterungsdrehachse einerseits, dass die Sperrfläche sich in radialer Richtung erstrecken kann. Des Weiteren umfasst eine Erstreckung in im Wesentlichen radialer Richtung auch eine Erstreckung, bei der die Sperrfläche parallel zu der radialen Richtung verläuft, insbesondere mit einem geringfügigen Versatz zu der radialen Erstreckung.

Gemäß einer weiteren bevorzugten Ausführungsform kann der Gabelschaftstützabschnitt rohrschellenartig ausgebildet sein und zwei Schenkel aufweisen, die zwischen sich einen Aufnahmebereich zum Aufnehmen der Gabelschafthalterung definieren. Zur Erzeugung einer Klemmkraft zum Feststellen der Gabelschafthalterung können freie Enden der Schenkel über einen Bolzen oder einen Zuganker so miteinander verbunden sein, dass ein Abstand zwischen den freien Enden verringert werden kann, um eine Abmessung des Aufnahmebereichs zu reduzieren. Auf diese Weise kann die Gabelschafthalterung in dem Gabelschaftstützabschnitt festgeklemmt werden. Ein derart ausgebildeter Vorbau kann somit einerseits die Drehbewegbarkeit der Gabelschafthalterung durch einen formschlüssigen Eingriff sperren und zusätzlich durch Erzeugung einer Klemmkraft beziehungsweise eines Reibschlusses zwischen der Gabelschafthalterung und dem Gabelschaftstützabschnitt erzeugen.

Die Gabelhalterung kann die bereits vorstehend erwähnte Hülse aufweisen. Die Hülse kann Hülsenabschnitte 176, 178 aufweisen, die sich beidseits in axialer Richtung über den Klemmkörper hinaus erstrecken. Die beiden auf entgegengesetzten Seiten des Klemmkörpers vorstehenden Hülsenabschnitte 176, 178 können im Aufnahmebereich zwischen den Schenkeln unter Bildung eines Gleitlagers an dem Gabelschaftstützabschnitt abgestützt sein. Ein Festklemmen der Gabelschafthalterung kann somit durch Festklemmen der Hülsenabschnitte 176, 178 zwischen den Schenkeln erfolgen.

Gemäß einer weiteren bevorzugten Ausführungsform können zur Aufnahme des Bolzens in den freien Enden durch umlaufende Wände begrenzte Aufnahmeöffnungen vorgesehen sein, wobei von den umlaufenden Wänden jeweils ein innerer Wandabschnitt bauchig in den Aufnahmebereich hineinragt. Der bauchig in den Aufnahmebereich hineinragende Wandabschnitt ist in der Art eines Hohlzylinderabschnitts ausgebildet und weist eine Wandstärke auf, die zum Festspannen des Bolzens oder Zugankers ausreichend ist. An einem Außenumfang des Halterabschnitts, beispielsweise des Klemmelements der Gabelschafthalterung, kann eine längliche Vertiefung zur Aufnahme des in den Aufnahmebereich ragenden Wandabschnitts vorgesehen sein. Auf diese Weise kann der Vorbau in Längsrichtung kompakter ausgestaltet werden.

Ferner ist gemäß der vorliegenden Erfindung ein Fahrrad, insbesondere ein Mountainbike, geschaffen. Das Fahrrad weist einen Fahrradrahmen und eine Fahrradgabel auf. Die Fahrradgabel ist mittels eines wie vorstehend beschriebenen Vorbaus an dem Fahrradrahmen gehalten.

Weitere Merkmale ergeben sich aus der nachfolgenden detaillierten Beschreibung.

### Kurze Beschreibung der Figuren

- Figur 1: zeigt in perspektivischer Darstellung Vorbau gemäß einer Ausführungsform, der an einem Gabelschaft befestigt ist und einen Lenkerschaft trägt.
- Figur 2: zeigt den in Figur 1 dargestellten Vorbau in einer weiteren perspektivischen Ansicht.
- Figur 3: zeigt eine Vorderansicht des Vorbaus.
- Figur 4: zeigt eine Schnittansicht des Vorbaus entlang der in Figur 3 dargestellten Längserstreckungsebene B-B.
- Figur 5: zeigt eine Seitenansicht des Vorbaus.
- Figuren 6 und 7: zeigen perspektivische Ansichten einer Gabelschafthalterung des Vorbaus.

### Detaillierte Beschreibung von Ausführungsformen

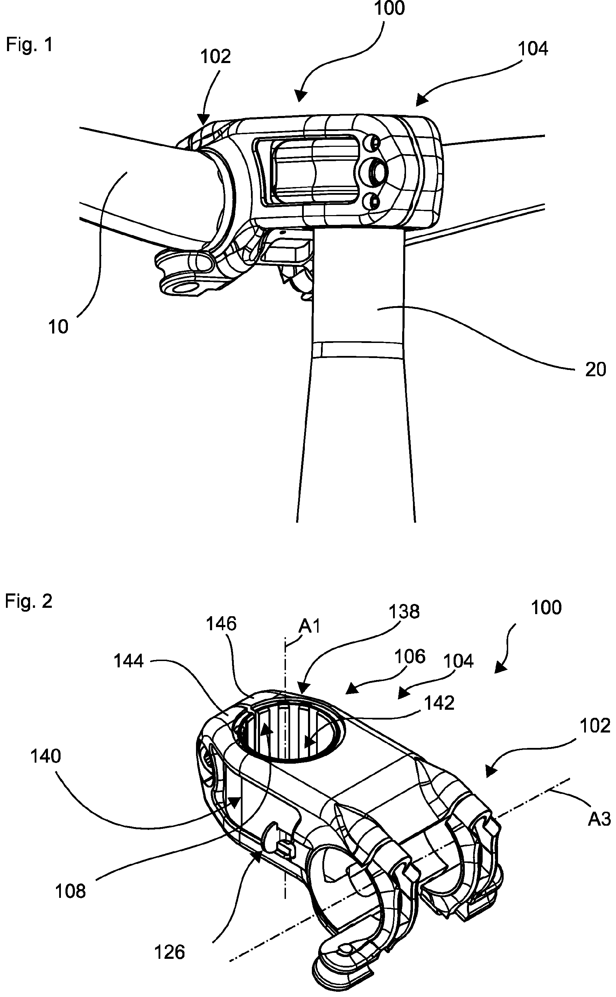

In den Figuren 1 und 2 ist ein Vorbau 100 gezeigt. Der Vorbau 100 ist in Figur 1 in einem Zustand gezeigt, in welchem er an einem Gabelschaft 20 befestigt ist und einen Lenkerschaft 10 aufgenommen hat. Der Vorbau 100 weist einen Lenkerkopplungsabschnitt 102 und einen Gabelschaftkopplungsabschnitt 104 auf. Der Lenkerschaft 10 ist im Lenkerkopplungsabschnitt 102 aufgenommen und der Gabelschaft 20 ist im Gabelschaftkopplungsabschnitt 104 aufgenommen. Der Lenkerkopplungsabschnitt 102 und der Gabelschaftkopplungsabschnitt 104 sind in Längsrichtung des Vorbaus 100 beabstandet zueinander ausgebildet.

Der Lenkerkopplungsabschnitt 102 ist rohrschellenartig ausgebildet und ist dazu in der Lage, den Lenkerschaft 10 festzuklemmen. Das Zentrum der Lenkerklemmung ist als Achse A3 dargestellt. Im Gabelschaftkopplungsabschnitt 104 ist eine Gabelschafthalterung 108 drehbar aufgenommen. Das Zentrum des Gabelschafts 20, welches mit einer Gabelschafthalterungsdrehachse zusammenfällt, ist als Achse A1 dargestellt. Der Gabelschaftkopplungsabschnitt 104 weist einen Gabelschaftstützabschnitt 106 auf, in dem die Gabelschafthalterung 108 aufgenommen ist. Genauer gesagt ist die Gabelschafthalterung 108 in einem Aufnahmebereich 142 aufgenommen, der zwischen zwei Schenkeln 138, 140 des Gabelschaftstützabschnitts 106 ausgebildet ist.

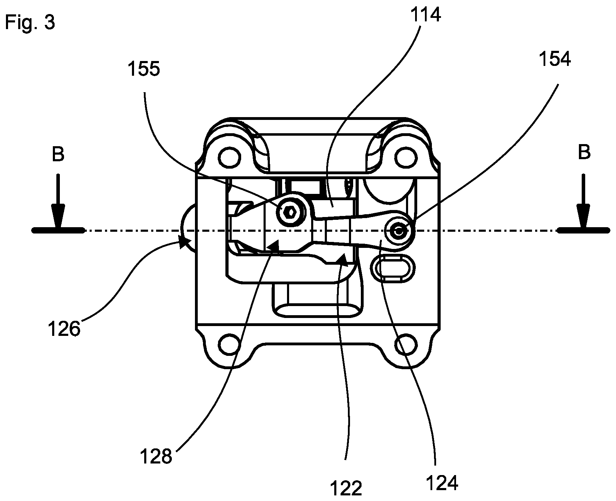

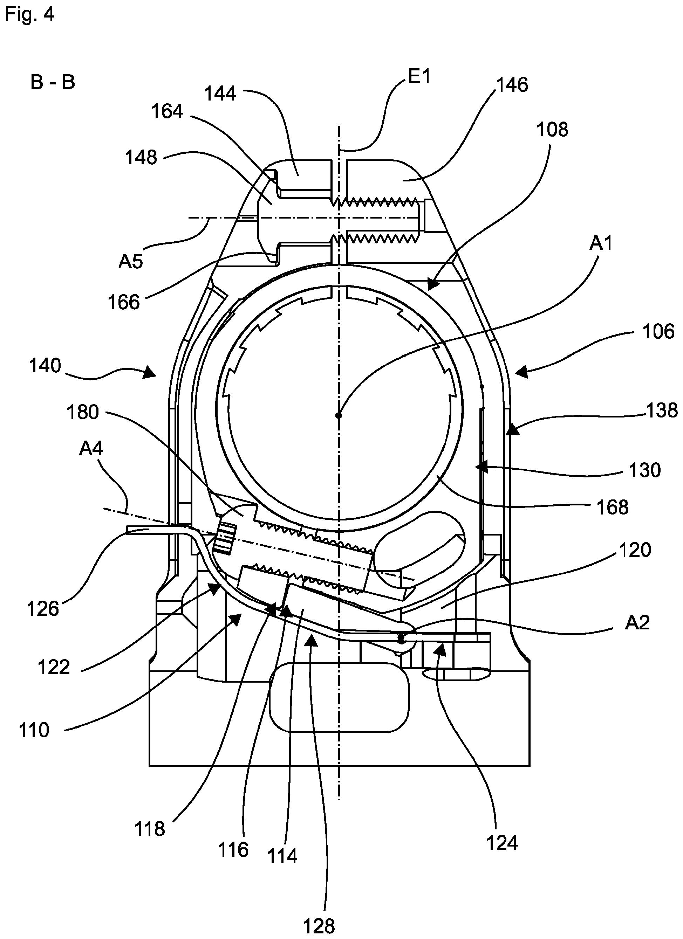

Der genauere Aufbau des Vorbaus 100 wird nachfolgend unter Bezugnahme auf die Figuren 2, 3 und 4 detaillierter erläutert. Figur 3 zeigt eine Vorderansicht des Vorbaus 100 in Längsrichtung und Figur 4 zeigt eine Schnittansicht entlang einer sich im Wesentlichen in Längsrichtung erstreckenden Schnittebene B-B aus Figur 3.

Wie bereits vorstehend beschrieben, weist der Gabelschaftkopplungsabschnitt 104 den Gabelschaftstützabschnitt 106 auf. Der Gabelschaftstützabschnitt 106 weist die zwei Schenkel 138, 140 auf, die sich in Längsrichtung des Vorbaus 100 nach hinten, also von dem Lenkerkopplungsabschnitt 104 weg, erstrecken. Wie bereits unter Bezugnahme auf Figur 2 beschrieben, ist zwischen den Schenkeln 138, 140 der Aufnahmebereich 142 zum Aufnehmen der Gabelschafthalterung 108 ausgebildet. Bei der in Figur 4 gezeigten Anordnung ist die Gabelschafthalterung 108 im Aufnahmebereich 142 aufgenommen. Die Schenkel 138, 140 weisen jeweils ein freies Ende 144, 146 auf. Die freien Enden 144, 146 sind beabstandet zueinander angeordnet. Anders gesagt ist ein Spalt zwischen den freien Enden 144, 146 vorgesehen. Bei der gezeigten Ausführungsform sind die freien Enden 144, 146 der Schenkel 138, 140 über einen Bolzen 148 so miteinander verbunden, dass der Spalt zwischen den freien Enden 144, 146 bei Betätigung des Bolzens 148 vergrößert und verkleinert werden kann. Auf diese Weise ist es möglich, den Aufnahmebereich 142 beziehungsweise dessen Abmessung zu vergrößern oder zu verkleinern. Wird die Abmessung des Aufnahmebereichs 142 bei eingesetzter Gabelschafthalterung 108 verkleinert, so kann auf diese Weise die Gabelschafthalterung 108 festgeklemmt werden. Anders gesagt kann die Gabelschafthalterung 108 durch Reibschluss in einer gewünschten Stellung relativ zu dem Gabelschaftstützabschnitt 106 festgestellt werden.

Bei der gezeigten Ausführungsform ist im freien Ende 146 des Schenkels 138 eine Gewindebohrung vorgesehen und ist im freien Ende 144 des Schenkels 140 ein Stützbereich für einen Kontakt mit einem Kopf des Bolzens 148 ausgebildet. Der Stützbereich weist eine erste Kontaktfläche 164 und eine zweite Kontaktfläche 166 zur Abstützung des Kopfes des Bolzens 148 an dem freien Ende 144 auf. Die erste Kontaktfläche 164 und die zweite Kontaktfläche 166 sind in axialer Richtung entlang einer Längsachse A5 des Bolzens beziehungsweise einer Bolzenaufnahmeöffnung 162 versetzt zueinander angeordnet. In einer entspannten Stellung, wie in Figur 4 gezeigt, in welcher der Abstand zwischen den freien Enden nicht verringert ist, ist demnach lediglich die erste Kontaktfläche 164 in Kontakt mit dem Kopf des Bolzens 148. Die zweite Kontaktfläche 166 gelangt erst dann in Kontakt mit dem Kopf des Bolzens 148, wenn der Bolzen 148 zum Erzeugen einer Klemmkraft betätigt wird. Die erste Kontaktfläche 164 und die zweite Kontaktfläche 166 sind demnach so zueinander versetzt, dass ein Kopf des Bolzens 148 dann, wenn die Gabelschafthalterung 108 festgeklemmt ist, auf der ersten Kontaktfläche 164 und der zweiten Kontaktfläche 166 optimal aufliegt, um eine verbesserte Kraftverteilung zu erreichen.

Wie es in Figur 4 ebenfalls gezeigt ist, erstrecken sich die Schenkel 138, 140 auf jeweils entgegengesetzten Seiten einer Längsmittelebene E1 des Vorbaus 100. Der Bolzen 148 beziehungsweise die Aufnahmeöffnung 162 für den Bolzen 148 erstreckt sich im Wesentlichen senkrecht zu der Längsmittelebene E1.

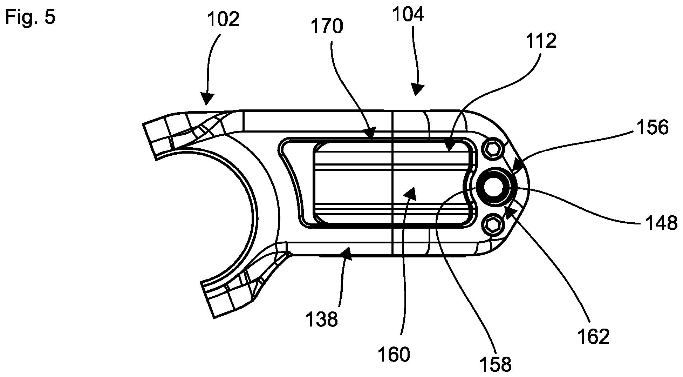

Figur 5 zeigt eine Seitenansicht eines Abschnitts des Vorbaus 100. Aus dieser Ansicht ist der Aufbau des hinteren Bereichs des Vorbaus 100 im Bereich der freien Enden 144, 146 des Gabelschaftstützabschnitts 106 dargestellt. Wie bereits vorstehend erwähnt, sind in diesem Bereich Aufnahmeöffnungen 162 zur Aufnahme des Bolzens 148 in den freien Enden 144, 146 vorgesehen. Die Aufnahmeöffnungen 162 sind durch umlaufende Wände 156 begrenzt. Ein innerer Wandabschnitt 158 der umlaufenden Wände 156 ragt bauchig in den Aufnahmebereich 142 hinein. Auf diese Weise ist es möglich, die Gesamtlänge des Vorbaus 100 zu reduzieren.

Wie es bereits aus den Figuren 4 und 5 ersichtlich ist, ist im Aufnahmebereich 142 die bereits vorstehend erwähnte Gabelschafthalterung 108 aufgenommen. Der Aufbau der Gabelschafthalterung 108 wird nachfolgend unter Bezugnahme auf die Figuren 4 bis 7 genauer beschrieben. Wie es aus den Figuren 4, 6 und 7 ersichtlich ist, weist die Gabelschafthalterung 108 einen asymmetrisch geformten, rohrschellenartigen Klemmkörper 130 auf. Der Klemmkörper 130 weist zwei Schenkelabschnitte 132, 134 auf. Die Schenkelabschnitte 132, 134 definieren zwischen sich einen Aufnahmebereich 184 zum Aufnehmen des Gabelschafts 20 auf. Die Schenkelabschnitte 132, 134 weisen jeweils ein freies Ende 150, 152 auf. Zwischen den freien Enden 150, 152 ist ein Spalt vorgesehen. Die freien Enden 150, 152 sind mittels Schrauben 180, 182 miteinander verbunden. Durch Betätigung der Schrauben kann ein Abstand beziehungsweise der Spalt zwischen den beiden freien Enden 150, 152 verringert werden, um eine Abmessung des Aufnahmebereichs 184 zum Festklemmen des Gabelschafts 20 in der Gabelschafthalterung 108 zu reduzieren. Die freien Enden 150, 152 sind dabei als Flanschabschnitte ausgebildet.

Wie bereits vorstehend erwähnt ist die Gabelschafthalterung 108 asymmetrisch ausgebildet. Dies ist in Figur 4 deutlich zu erkennen. Insbesondere weist die Gabelschafthalterung 108 dabei keine Symmetrie zu einer durch den zwischen den freien Enden 150, 152 gebildeten Spalt verlaufenden Ebene (nicht dargestellt) auf. Zudem ist die Gabelschafthalterung 108 nicht rotationssymmetrisch zu der Gabelschafthalterungsdrehachse A1.

Im Klemmkörper ist eine Hülse 168 angeordnet, die zur Aufnahme des Gabelschafts 20 ausgebildet ist und zur Abstützung der Gabelschafthalterung 108 an dem Gabelschaftstützabschnitt 106 in der Art einer Gleitlagerung dient. Die Hülse 168 weist Hülsenabschnitte 176, 178 auf, die sich beidseits des Klemmkörpers 130 in axialer Richtung über den Klemmkörper 130 hinaus erstrecken. Die beiden auf entgegengesetzten Seiten des Klemmkörpers 130 vorstehenden Hülsenabschnitte 176, 178 sind im Aufnahmebereich zwischen den Schenkeln unter Bildung eines Gleitlagers an dem Gabelschaftstützabschnitt abgestützt. Ein Festklemmen der Gabelschafthalterung 108 kann somit durch Festklemmen der Hülsenabschnitte zwischen den Schenkeln erfolgen.

Der Klemmkörper 130 weist ferner eine in Umfangsrichtung des Klemmkörpers 130 verlaufende längliche Vertiefung 160 auf, deren Form zu der Form des in den Aufnahmebereich 142 ragenden Wandabschnitts 158 korrespondiert. Anders gesagt ist die längliche Vertiefung 160 dazu eingerichtet, den in den Aufnahmebereich 142 ragenden Wandabschnitt 158 zumindest teilweise aufzunehmen, wodurch eine in Längsrichtung besonders kompakte Bauform des Vorbaus 100 ermöglicht wird. Die längliche Vertiefung 160 weist einen im Wesentlichen gerade verlaufenden Abschnitt, welcher windschief zu der Gabelschafthalterungsdrehachse A1verläuft, und einen gekrümmten Abschnitt auf, der sich um die Drehachse A1 herum erstreckt. Der gerade verlaufende Abschnitt ist dazu ausgebildet, um in flächigen Kontakt mit dem in den Aufnahmebereich 142 ragenden Wandabschnitt 158 zu gelangen.

Wie bereits vorstehend erwähnt ist die Gabelschafthalterung 108 drehbar im Gabelschaftstützabschnitt 106 gehalten. Auf diese Weise ist es möglich, den Gabelschaftstützabschnitt 106 um die Gabelschafthalterung 108 beziehungsweise einen in der Gabelschafthalterung 108 aufgenommenen Gabelschaft herum zu schwenken. Ein Schwenkbereich wird dabei einerseits durch einen Kontakt des in den Aufnahmebereich 142 ragenden Wandabschnitts 158 mit dem gerade verlaufenden Abschnitt der länglichen Vertiefung 160 begrenzt und wird andererseits durch einen Kontakt von einem der Schenkel 138, 140 mit dem Gabelschaftstützabschnitt 106 begrenzt. Der Schwenkbereich zwischen diesen beschriebenen Endpositionen kann dabei vorzugsweise 90° umfassen. Auf diese Weise ist es möglich, einen an dem Vorbau 100 befestigten Lenker um 90° zu dem Gabelschaft zwischen einer Gebrauchsstellung und einer Nichtgebrauchsstellung zu verdrehen.

Um den Lenker in der Gebrauchsstellung zu arretieren, kann, wie bereits vorstehend beschrieben, eine Klemmkraft durch Spannen der freien Enden 144, 146 auf die Gabelschafthalterung 108, genauer gesagt auf die vorstehenden Hülsenabschnitte 176, 178 aufgebracht werden, um die Gabelschafthalterung 108 mittels Reibschluss drehfest in dem Gabelschaftstützabschnitt 106 zu halten.

Um die Gabelschafthalterung 108 in eine definierte Position zum Einklemmen derselben zu bringen und in dieser zu halten, weist die gezeigte Ausführungsform einen Sperrmechanismus 110 zum Sperren einer Drehbewegbarkeit der Gabelschafthalterung 108 auf. Der Aufbau des Sperrmechanismus 110 ist in Figur 4 gut zu erkennen. Der Sperrmechanismus 110 weist ein plattenartiges Rastelement 114 auf. Das Rastelement 114 weist an einem Längsende einen Kontaktabschnitt 116 auf und ist an einem gegenüberliegenden Längsende schwenkbar an einem Stützabschnitt 120 des Gabelschaftstützabschnitts 106 abgestützt. Das plattenartige Rastelement 114 ist bei der gezeigten Ausführungsform schwenkbar um eine Schwenkachse A2 an dem Stützabschnitt 120 abgestützt, welche im Wesentlichen parallel zu der Gabelschafthalterungsdrehachse A1 orientiert ist.

Das Rastelement 114 ist an einer Blattfeder 122 befestigt. Genauer gesagt ist das Rastelement 114 im Bereich des Kontaktabschnitts 116 oder benachbart zu diesem an einem Befestigungsabschnitt 128 der Blattfeder 122 befestigt, der sich zwischen einem Fixierabschnitt 124 der Blattfeder und einem Betätigungsabschnitt 126 der Blattfeder befindet. Die Blattfeder 122 ist mittels des Fixierabschnitts 124 einseitig am Gabelschaftstützabschnitt 106 fixiert. Insbesondere ist bei der gezeigten Ausführungsform, wie in Figur 3 ersichtlich, die Blattfeder 122 mittels einer Schraube 154 im Bereich des Stützabschnitts 120 befestigt, an welchem das Rastelement 114 schwenkbar abgestützt ist. Das Rastelement 114 ist ferner über eine Schraube 155 an dem Befestigungsabschnitt 128 befestigt.

Die Blattfeder 122 ist abschnittsweise um die Gabelschafthalterungsdrehachse A1 herum gekrümmt ausgebildet. Bei der gezeigten Ausführungsform verlaufen der Fixierabschnitt 124 und der Betätigungsabschnitt 126 im Wesentlichen parallel zueinander. Die Blattfeder erstreckt sich somit ausgehend von dem Fixierabschnitt 124 zunächst im Wesentlichen senkrecht zu der Längsmittelebene E1 und verläuft dann im Bereich des Befestigungsabschnitts 128 zunächst geneigt zu der Längsmittelebene E1 und dann um die Gabelschafthalterungsdrehachse A1 herum gekrümmt bis zu dem Betätigungsabschnitt 126.

Eine effektive Länge zwischen Befestigungspunkt der Blattfeder zu dem vorstehend erwähnten Kontaktabschnitt 116 ist bei dieser Ausgestaltung länger, wodurch bei Betätigung des Betätigungsabschnitts 126 ein Weg, den der Kontaktabschnitt 116 zurücklegt, länger ist. Zudem ist bei dieser Ausgestaltung das Rastelement 114 in einer Sperrposition so orientiert, dass ein optimaler Kraftfluss in Längsrichtung des Rastelements 114 von dem Kontaktabschnitt 116 zu dem Stützabschnitt 120 erfolgt. Durch den vorstehend beschriebenen Aufbau der Blattfeder 122 wird zudem eine definierte Verformung der Blattfeder 122 gewährleistet, wenn der Kontaktabschnitt 116 mit einer Kraft beaufschlagt wird. Insbesondere wird ein unkontrolliertes Aufwölben eines Abschnitts der Blattfeder 122, wie es bei einer geraden Blattfeder auftreten könnte, vermieden.

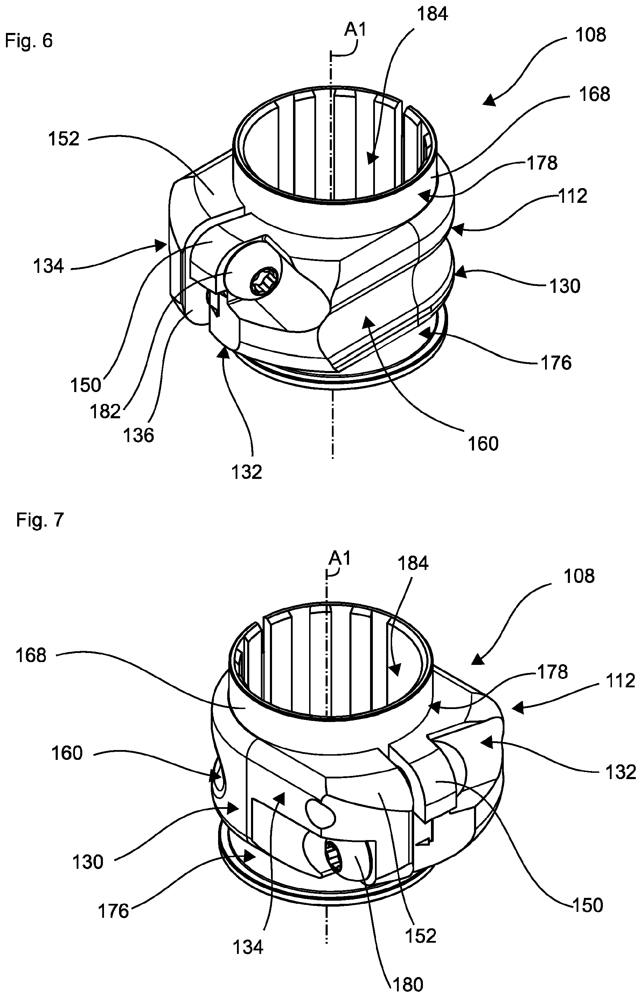

Wie bereits vorstehend beschrieben weist der Klemmkörper 130 zwei Schenkelabschnitte 132, 134 auf. An einem freien Ende 152 der beiden freien Enden 150, 152 der Schenkelabschnitte 132, 134 ist eine Sperrfläche 136 vorgesehen. Diese Sperrfläche 136 dient als kooperierender Teil des zu erzeugenden formschlüssigen Eingriffs mit der Sperreinrichtung 110. Die Sperrfläche 136 ist in Figur 6 gut zu erkennen und verläuft bei der gezeigten Ausführungsform parallel zu einer radialen Richtung zu der Gabelschafthalterungsdrehachse A1. Die Sperrfläche 136 ist Teil eines Sperrabschnitts 118 an dem freien Ende 152. Diese Sperrfläche 136 kann mit dem Kontaktabschnitt 116 beziehungsweise einer das Rastelement 114 in Längsrichtung begrenzenden Seitenfläche im Bereich des Kontaktabschnitts 116 in Kontakt gelangen, wenn sich das Rastelement 114 in der Sperrposition befindet.

Durch Betätigung der Blattfeder 122, genauer gesagt durch Verlagerung des Betätigungsabschnitts 126 in Längsrichtung des Vorbaus 100 beziehungsweise entlang der Längsmittelebene E1 kann das Rastelement 114 zwischen der bereits erwähnten Sperrposition, in welcher der Kontaktabschnitt 116 des Rastelements 114 in Kontakt mit dem Sperrabschnitt 118 der Gabelschafthalterung 108 gelangen kann, und einer Freigabeposition verschwenkt werden, in welcher der Kontaktabschnitt 116 nicht in Kontakt mit dem Sperrabschnitt 118 der Gabelschafthalterung 108 gelangen kann. Bei dem in Figur 4 gezeigten Zustand befindet sich das Rastelement 114 in der Sperrposition. In der Sperrposition ist die Gabelschafthalterung 130 so orientiert, dass die Erstreckungsrichtungen der die freien Enden 150, 152 verbindenden Schrauben 180, 182 geneigt zu der Längsmittelebene E1 orientiert sind, wie der in Figur 4 dargestellte Verlauf einer Längsachse A4 der Schraube 180 verdeutlicht. Durch Bewegung des Betätigungsabschnitts 126 nach vorne, also nach unten in Figur 4, wird das Rastelement in Richtung Freigabeposition verschwenkt.

Um ein Verschwenken der Gabelschafthalterung 108 zu ermöglichen, weist der Gabelschaftkopplungsabschnitt 104 ferner eine Ausnehmung 170 auf einer Seite des Gabelschaftstützabschnitts 106, genauer gesagt im Schenkel 138, auf, durch welche die freien Enden 150, 152 hindurchtreten können, wenn der Lenker in eine Nichtgebrauchsposition geschwenkt wird. Durch diese Ausnehmung 170 ist, wie in Figur 5 gezeigt, der Klemmkörper 130 und der Halterabschnitt 112 der Gabelschafthalterung 108 mit der darauf ausgebildeten Ausnehmung 160 sichtbar.

### Bezugszeichen

- 10: Lenkerschaft
- 20: Gabelschaft
- 100: Vorbau
- 102: Lenkerkopplungsabschnitt
- 104: Gabelschaftkopplungsabschnitt
- 106: Gabelschaftstützabschnitt
- 108: Gabelschafthalterung
- 110: Sperrmechanismus
- 112: Halterabschnitt
- 114: Rastelement
- 116: Kontaktabschnitt
- 118: Sperrabschnitt
- 120: Stützabschnitt
- 122: Drängbauteil, Blattfeder
- 124: Fixierabschnitt
- 126: Betätigungsabschnitt
- 128: Befestigungsabschnitt
- 130: Klemmkörper
- 132, 134: Schenkelabschnitt
- 136: Sperrfläche
- 138, 140: Schenkel
- 142: Aufnahmebereich
- 144, 146: freies Ende
- 148: Bolzen
- 150; 152: freies Ende
- 154: Schraube
- 155: Schraube
- 156: Wände
- 158: Wandabschnitt
- 160: längliche Vertiefung
- 162: Aufnahmeöffnung
- 164: erste Kontaktfläche
- 166: zweite Kontaktfläche
- 168: Hülse
- 170: Ausnehmung
- 176, 178: Hülsenabschnitt
- 180, 182: Schraube
- 184: Aufnahmebereich
- A1: Achse, Gabelschafthalterungsdrehachse
- A2: Schwenkachse
- A3: Achse
- A4: Längsachse
- A5: Längsachse
- E1: Längsmittelebene

## Patentansprüche

1. Vorbau (100) für ein Fahrrad, mit einem Lenkerkopplungsabschnitt (102) und einem beabstandet zu diesem vorgesehenen Gabelschaftkopplungsabschnitt (104), wobei der Gabelschaftkopplungsabschnitt (104) einen Gabelschaftstützabschnitt (106) und eine in dem Gabelschaftstützabschnitt (106) drehbar aufgenommene Gabelschafthalterung (108) aufweist, wobei der Vorbau (100) ferner einen Sperrmechanismus (110) zum Sperren einer Drehbewegbarkeit der Gabelschafthalterung (108) in zumindest einer Drehrichtung aufweist,
wobei der Sperrmechanismus (110) dazu eingerichtet ist, die Drehbewegbarkeit der Gabelschafthalterung (108) durch formschlüssigen Eingriff mit einem in axialer Richtung innerhalb des Gabelschaftstützabschnitts (106) befindlichen Halterabschnitt (112) der Gabelschafthalterung (108) zu sperren.

2. Vorbau (100) nach Anspruch 1,
**dadurch gekennzeichnet, dass**
der Sperrmechanismus (110) im Wesentlichen vollständig innerhalb des Gabelschaftstützabschnitts (106) vorgesehen ist.

3. Vorbau (100) nach Anspruch 2,
**dadurch gekennzeichnet, dass**
der Sperrmechanismus (110) ein Rastelement (114) aufweist, welches zwischen einer Sperrposition, in welcher ein Kontaktabschnitt (116) des Rastelements (114) in Kontakt mit einem Sperrabschnitt (118) der Gabelschafthalterung (108) gelangen kann, um eine Drehung der Gabelschafthalterung (108) zu sperren, und einer Freigabeposition beweglich ist, in welcher der Kontaktabschnitt (116) nicht in Kontakt mit dem Sperrabschnitt (118) der Gabelschafthalterung (108) gelangen kann, um eine Drehung der Gabelschafthalterung (108) zu gestatten.

4. Vorbau (100) nach Anspruch 3,
**dadurch gekennzeichnet, dass**
der Kontaktabschnitt (116) in Richtung einer Gabelschafthalterungsdrehachse (A1) der Gabelschafthalterung (108) hin- und herbewegbar angeordnet ist.

5. Vorbau (100) nach Anspruch 4,
**dadurch gekennzeichnet, dass**
das Rastelement (114) schwenkbar an einem Stützabschnitt (120) des Gabelschaftstützabschnitts (106) abgestützt ist, vorzugsweise derart, dass das Rastelement (114) schwenkbar um eine zu der Gabelschafthalterungsdrehachse (A1) parallele Schwenkachse (A2) ist.

6. Vorbau (100) nach einem der Ansprüche 3 bis 5,
**dadurch gekennzeichnet, dass**
der Sperrmechanismus ein Drängbauteil (122) aufweist, welches das Rastelement (114) in Richtung Sperrposition vorspannt.

7. Vorbau (100) nach Anspruch 6,
**dadurch gekennzeichnet, dass**
das Drängbauteil (122) eine Blattfeder aufweist, die vorzugsweise einseitig an dem Gabelschaftstützabschnitt (106) befestigt ist, wobei die Blattfeder vorzugsweise zumindest abschnittsweise um die Gabelschafthalterungsdrehachse (A1) herum gekrümmt ausgebildet ist.

8. Vorbau (100) nach Anspruch 7,
**dadurch gekennzeichnet, dass**
das Drängbauteil (122) mittels eines Fixierabschnitts (124) einseitig am Gabelschaftstützabschnitt (106) fixiert ist und neben dem Fixierabschnitt (124) einen durch einen Nutzer handhabbaren Betätigungsabschnitt (126) zum Verstellen des Drängbauteils (122) in Richtung Freigabeposition sowie einen vorzugsweise in Erstreckungsrichtung des Drängbauteils (122) zwischen dem Fixierabschnitt (124) und dem Betätigungsabschnitt (126) vorgesehenen Befestigungsabschnitt (128) aufweist, an welchem das Rastelement (114) vorgesehen ist.

9. Vorbau (100) nach Anspruch 8,
**dadurch gekennzeichnet, dass**
der Betätigungsabschnitt (126) seitlich aus dem Gabelschaftstützabschnitt (106) herausragt.

10. Vorbau (100) nach einem der vorhergehenden Ansprüche,
**dadurch gekennzeichnet, dass**
die Gabelschafthalterung (108) einen asymmetrisch geformten, rohrschellenartigen Klemmkörper (130) aufweist.

11. Vorbau (100) nach Anspruch 10,
**dadurch gekennzeichnet, dass**
der Klemmkörper (130) zwei Schenkelabschnitte (132, 134) aufweist, die zwischen sich einen Aufnahmebereich (184) zum Aufnehmen eines Gabelschaftabschnitts aufweisen, wobei zur Erzeugung einer Klemmkraft ein Abstand zwischen zwei freien Enden (150, 152) der Schenkelabschnitte (132, 134) verringerbar ist, um eine Abmessung des Aufnahmebereichs (184) zu reduzieren, wobei an einem freien Ende (152) der freien Enden (150, 152) eine Sperrfläche (136) als kooperierender Teil des formschlüssigen Eingriffs ausgebildet ist, wobei die Sperrfläche (136) im Wesentlichen in radialer Richtung zu der Gabelschafthalterungsdrehachse (A1) verläuft.

12. Vorbau (100) nach Anspruch 11,
**dadurch gekennzeichnet, dass**
der Gabelschaftstützabschnitt (106) rohrschellenartig ausgebildet ist und zwei Schenkel (138, 140) aufweist, die zwischen sich einen Aufnahmebereich (142) zum Aufnehmen der Gabelschafthalterung (108) definieren, wobei zur Erzeugung einer Klemmkraft zum Feststellen der Gabelschafthalterung (108) freie Enden (144, 146) der Schenkel (138, 140) über einen Bolzen (148) so miteinander verbunden sind, dass ein Abstand zwischen den freien Enden (144, 146) zur Reduzierung einer Abmessung des Aufnahmebereichs (142) verringert werden kann.

13. Vorbau (100) nach Anspruch 12,
**dadurch gekennzeichnet, dass**
zur Aufnahme des Bolzens (148) in jedem freien Ende (144, 146) durch umlaufende Wände (156) begrenzte Aufnahmeöffnungen (162) vorgesehen sind, wobei von den umlaufenden Wänden (156) jeweils ein innerer Wandabschnitt (158) bauchig in den Aufnahmebereich (142) hineinragt, und wobei in einem Außenumfang des Halterabschnitts (112) eine längliche Vertiefung (160) zur Aufnahme des in den Aufnahmebereich (142) ragenden Wandabschnitts (158) vorgesehen ist.

14. Fahrrad, insbesondere Mountainbike, mit einem Fahrradrahmen und einer Fahrradgabel,
**dadurch gekennzeichnet, dass**
die Fahrradgabel mittels eines Vorbaus (100) nach einem der vorhergehenden Ansprüche an dem Fahrradrahmen gehalten ist.

## Claims

1. Stem (100) for a bicycle, having a handlebar coupling section (102) and a steerer tube coupling section (104) provided spaced apart from the former, wherein the steerer tube coupling section (104) has a steerer tube support section (106) and a steerer tube holder (108) which is received rotatably in the steerer tube support section (106), wherein the stem (100) furthermore has a locking mechanism (110) for locking a rotational movability of the steerer tube holder (108) in at least one direction of rotation, wherein the locking mechanism (110) is configured to lock the rotational movability of the steerer tube holder (108) by means of a positively locking engagement with a holder section (112) of the steerer tube holder (108) located in the axial direction within the steerer tube support section (106).

2. Stem (100) according to Claim 1,
**characterized in that**
the locking mechanism (110) is provided substantially completely within the steerer tube support section (106).

3. Stem (100) according to Claim 2,
**characterized in that**
the locking mechanism (110) has a latching element (114) which can be moved between a locking position, in which a contact portion (116) of the latching element (114) can come into contact with a locking portion (118) of the steerer tube holder (108) to lock a rotation of the steerer tube holder (108), and a release position, in which the contact portion (116) cannot come into contact with the locking portion (118) of the steerer tube holder (108) to allow a rotation of the steerer tube holder (108).

4. Stem (100) according to Claim 3,
**characterized in that**
the contact portion (116) is arranged such that it can be moved to and fro in the direction of a steerer tube holder rotational axis (A1) of the steerer tube holder (108).

5. Stem (100) according to Claim 4,
**characterized in that**
the latching element (114) is pivotably supported on a support portion (120) of the steerer tube support section (106), preferably in such a way that the latching element (114) is pivotable about a pivot axis (A2) parallel to the steerer tube holder rotational axis (A1).

6. Stem (100) according to one of Claims 3 to 5,
**characterized in that**
the locking mechanism comprises a displacing component (122) which preloads the latching element (114) in the direction of the locking position.

7. Stem (100) according to Claim 6,
**characterized in that**
the displacing component (122) has a leaf spring which is preferably fastened on one side to the steerer tube support section (106), wherein the leaf spring is preferably of at least partially curved configuration around the steerer tube holder rotational axis (A1).

8. Stem (100) according to Claim 7,
**characterized in that**
the displacing component (122) is fixed on one side on the steerer tube support section (106) by means of a fixing portion (124) and, besides the fixing portion (124), has an operating portion (126) which can be handled by a user for adjusting the displacing component (122) in the direction of the release position and a fastening portion (128) which is preferably provided between the fixing portion (124) and the operating portion (126) in the direction of extent of the displacing component (122) and on which the latching element (114) is provided.

9. Stem (100) according to Claim 8,
**characterized in that**
the operating portion (126) protrudes laterally from the steerer tube support section (106).

10. Stem (100) according to one of the preceding claims,
**characterized in that**
the steerer tube holder (108) has an asymmetrically shaped, pipe clamp-like clamping body (130).

11. Stem (100) according to Claim 10,
**characterized in that**
the clamping body (130) has two leg portions (132, 134), which, between themselves, have a receiving region (184) for receiving a steerer tube portion, wherein, in order to generate a clamping force, a spacing between two free ends (150, 152) of the leg portions (132, 134) can be decreased to reduce a dimension of the receiving region (184), wherein a locking surface (136) is formed as a cooperating part of the positively locking engagement at a free end (152) of the free ends (150, 152), wherein the locking surface (136) runs substantially in the radial direction with respect to the steerer tube holder rotational axis (A1).

12. Stem (100) according to Claim 11,
**characterized in that**
the steerer tube support section (106) is formed in the manner of a pipe clamp and has two legs (138, 140) which, between themselves, define a receiving region (142) for receiving the steerer tube holder (108), wherein free ends (144, 146) of the legs (138, 140) are connected to each other via a bolt (148) in order to generate a clamping force for securing the steerer tube holder (108), in such a way that a spacing between the free ends (144, 146) can be decreased to reduce a dimension of the receiving region (142).

13. Stem (100) according to Claim 12,
**characterized in that**
receiving openings (162) delimited by surrounding walls (156) are provided in each free end (144, 146) for receiving the bolt (148), wherein an inner wall portion (158) protrudes in each case in a bulbous manner from the surrounding walls (156) into the receiving region (142), and wherein, in an outer periphery of the holder portion (112), an elongate depression (160) for receiving the wall portion (158) projecting into the receiving region (142) is provided.

14. Bicycle, especially mountain bike, with a bicycle frame and a bicycle fork,
**characterized in that**
the bicycle fork is held on the bicycle frame by means of a stem (100) according to one of the preceding claims.

## Revendications

1. Avant-corps (100) pour une bicyclette, avec une section de couplage de guidon (102) et une section de couplage de tige de fourche (104) prévue espacée de celle-ci, la section de couplage de tige de fourche (104) présentant une section de soutien de tige de fourche (106) et un support de tige de fourche (108) reçu de manière rotative dans la section de soutien de tige de fourche (106), l'avant-corps (100) présentant en outre un mécanisme de blocage (110) pour bloquer une capacité de rotation du support de tige de fourche (108) dans au moins une direction de rotation, le mécanisme de blocage (110) étant adapté pour bloquer la capacité de rotation du support de tige de fourche (108) par engagement par complémentarité de forme avec une section de retenue (112) du support de tige de fourche (108) se trouvant dans la direction axiale à l'intérieur de la section de soutien de tige de fourche (106).

2. Avant-corps (100) selon la revendication 1,
**caractérisé en ce que**
le mécanisme de blocage (110) est essentiellement prévu entièrement à l'intérieur de la section de soutien de tige de fourche (106).

3. Avant-corps (100) selon la revendication 2,
**caractérisé en ce que**
le mécanisme de blocage (110) présente un élément d'encliquetage (114) qui est mobile entre une position de blocage dans laquelle une section de contact (116) de l'élément d'encliquetage (114) peut venir en contact avec une section de blocage (118) du support de tige de fourche (108), pour bloquer la rotation du support de tige de fourche (108), et une position de libération dans laquelle la section de contact (116) ne peut pas venir en contact avec la section de blocage (118) du support de tige de fourche (108) pour permettre la rotation du support de tige de fourche (108).

4. Avant-corps (100) selon la revendication 3,
**caractérisé en ce que**
la section de contact (116) est agencée de manière à pouvoir effectuer un mouvement de va-et-vient dans la direction d'un axe de rotation de support de tige de fourche (A1) du support de tige de fourche (108).

5. Avant-corps (100) selon la revendication 4,
**caractérisé en ce que**
l'élément d'encliquetage (114) est soutenu de manière pivotante sur une section de soutien (120) de la section de soutien de tige de fourche (106), de préférence de telle sorte que l'élément d'encliquetage (114) peut pivoter autour d'un axe de pivotement (A2) parallèle à l'axe de rotation de support de tige de fourche (A1).

6. Avant-corps (100) selon l'une quelconque des revendications 3 à 5,
**caractérisé en ce que**
le mécanisme de blocage présente un composant de poussée (122) qui précontraint l'élément d'encliquetage (114) en direction de la position de blocage.

7. Avant-corps (100) selon la revendication 6,
**caractérisé en ce que**
le composant de poussée (122) présente un ressort à lame qui est attaché de préférence d'un côté à la section de soutien de tige de fourche (106), le ressort à lame étant de préférence réalisé de manière incurvée au moins par sections autour de l'axe de rotation de support de tige de fourche (A1).

8. Avant-corps (100) selon la revendication 7,
**caractérisé en ce que**
le composant de poussée (122) est fixé d'un côté sur la section de soutien de tige de fourche (106) au moyen d'une section de fixation (124) et présente, outre la section de fixation (124), une section d'actionnement (126) pouvant être manipulée par un utilisateur pour déplacer le composant de poussée (122) en direction de la position de libération ainsi qu'une section d'attache (128) prévue de préférence dans la direction d'extension du composant de poussée (122) entre la section de fixation (124) et la section d'actionnement (126), sur laquelle l'élément d'encliquetage (114) est prévu.

9. Avant-corps (100) selon la revendication 8,
**caractérisé en ce que**
la section d'actionnement (126) fait saillie latéralement de la section de soutien de tige de fourche (106).

10. Avant-corps (100) selon l'une quelconque des revendications précédentes,
**caractérisé en ce que**
le support de tige de fourche (108) présente un corps de serrage (130) de forme asymétrique, de type collier de serrage.

11. Avant-corps (100) selon la revendication 10,
**caractérisé en ce que**
le corps de serrage (130) présente deux sections de branche (132, 134) qui présentent entre elles une zone de réception (184) pour recevoir une section de tige de fourche, une distance entre deux extrémités libres (150, 152) des sections de branche (132, 134) pouvant être diminuée pour générer une force de serrage, pour réduire une dimension de la zone de réception (184), une surface de blocage (136) étant réalisée à une extrémité libre (152) des extrémités libres (150, 152) en tant que partie coopérante de l'engagement par complémentarité de forme, la surface de blocage (136) s'étendant essentiellement dans une direction radiale par rapport à l'axe de rotation de support de tige de fourche (A1).

12. Avant-corps (100) selon la revendication 11,
**caractérisé en ce que**
la section de soutien de tige de fourche (106) est réalisée à la manière d'un collier de serrage et présente deux branches (138, 140) définissant entre elles une zone de réception (142) pour recevoir le support de tige de fourche (108) ; pour produire une force de serrage pour immobiliser le support de tige de fourche (108), des extrémités libres (144, 146) des branches (138, 140) étant reliées l'une à l'autre par l'intermédiaire d'un boulon (148) de telle sorte qu'une distance entre les extrémités libres (144, 146) peut être diminuée pour réduire une dimension de la zone de réception (142).

13. Avant-corps (100) selon la revendication 12,
**caractérisé en ce que**
des ouvertures de réception (162) délimitées par des parois périphériques (156) sont prévues dans chaque extrémité libre (144, 146) pour recevoir le boulon (148), une section de paroi intérieure (158) faisant respectivement saillie sous forme bombée dans la zone de réception (142) à partir des parois périphériques (156), et un renfoncement allongé (160) étant prévu dans une circonférence extérieure de la section de retenue (112) pour recevoir la section de paroi (158) faisant saillie dans la zone de réception (142).

14. Bicyclette, notamment VTT, avec un cadre de bicyclette et une fourche de bicyclette,
**caractérisée en ce que**
la fourche de bicyclette est maintenue sur le cadre de bicyclette au moyen d'un avant-corps (100) selon l'une quelconque des revendications précédentes.
